Europäisches Patentamt

European Patent Office

Office européen des brevets

(11) Publication number: **0 232 509 B1**

## EUROPEAN PATENT SPECIFICATION

(45) Date of publication of patent specification: **04.03.92**    (51) Int. Cl.5: **G06F 9/46**

(21) Application number: **86117141.1**

(22) Date of filing: **09.12.86**

(54) Method for balancing the workload in a multiprocessing system.

(30) Priority: **04.02.86 US 826163**

(43) Date of publication of application:
**19.08.87 Bulletin 87/34**

(45) Publication of the grant of the patent:
**04.03.92 Bulletin 92/10**

(84) Designated Contracting States:
**DE FR GB**

(56) References cited:

**IEEE TRANSACTIONS ON COMPUTERS, vol. C-31, no. 11, November 1982, pages 1035-1044, IEEE, New York, US; R.E. BUEHRER et al.: "The ETH-multiprocessor EMPRESS: A dynamically configurable MIMD system"**

**PROCEEDINGS OF THE 5th INTERNATIONAL CONFERENCE ON DISTRIBUTED COMPUTING SYSTEMS, Denver, Colorado, 13th-17th May 1985, pages 539-546, IEEE; L.M. NI et al.: "Drafting algorithm - A dynamic process migration protocol for distributed systems"**

**ELECTRONICS, vol. 58, no. 39, 30th September 1985, pages 52,53, New York, US; "Work stations gain supercomputer strength"**

(73) Proprietor: **International Business Machines Corporation**
**Old Orchard Road**
**Armonk, N.Y. 10504(US)**

(72) Inventor: **DasGupta, Sumit**
**5 Drew Court**
**Wappingers Falls, N.Y. 12590(US)**
Inventor: **Hancock, John Michael**
**26 Loockerman Avenue**
**Poughkeepsie, N.Y. 12601(US)**
Inventor: **Kukula, James Herbert**
**20 Forbus Street**
**Poughkeepsie, N.Y. 12601(US)**
Inventor: **Peo, Roger Edwin**
**1 Shelley Road**
**Poughkeepsie, N.Y. 12603(US)**

(74) Representative: **Jost, Ottokarl, Dipl.-Ing.**
**IBM Deutschland GmbH Patentwesen und Urheberrecht Schönaicher Strasse 220**
**W-7030 Böblingen(DE)**

## Description

This invention relates to a method for balancing the workload in a multiprocessing system so as to efficiently use all of the processors and rapidly execute a program or job involving a multiplicity of tasks.

Multiprocessing systems have found use as hardware accelerators in the field of computer aided design for solving a variety of problems related to the design of computers and components. A hardware accelerator is normally connected to a host system which is used to enter jobs into the accelerator. The accelerator is designed to rapidly execute or solve a problem or different problems and because of the need for rapid execution or high performance, multiprocessing systems are used.

The types of jobs which such systems are designed to execute are those in which a job or problem can be broken down into a large number of small tasks that are distributed among the processors for parallel execution. The problem then exists of balancing the workload to efficiently execute all of the tasks rapidly without encountering bottlenecks. Such problem is particularly complicated by the tremendous computational demands of very large scale integration (VLSI) design. Another complication arises because there are some jobs in which new tasks are created or spawned as a result of executing prior tasks and these new tasks have to be also handled by the workload balancing.

In accordance with the prior art teaching of "Problem-heap: A Paradigm for Multiprocessor Algorithms" by Peter Moller--Nielsen and Jorgen Staunstrup, the general problem is recognized and its solution, as taught in such publication, is to provide a multiprocessor system in which ten processors are connected to a single bus. Each processor has its own local store. A global store is also connected to the bus. Tasks, called "problems" in the article, are stored in the global store in a "problem-heap" and are taken from the heap for execution. New tasks are added back to the heap.

Systems of the type described above seem to be disadvantageous where the number of processors is large because the use of a single heap or source of tasks, and the use of a single bus, would create bottlenecks when several of the processors are concurrently contending for access to the heap or for use of the bus.

In accordance with the invention a multiprocessing processing system is described which is dedicated to working on a single problem. The system has a plurality of processors interconnected with each other and with a like plurality of local memories. The IEEE Transactions On Computers, Vol. C-31, No. 11, Nov. 1982, pp. 1035-1044 also describes such a system, where, Work table means are provided for storing workload status information relative to each working processing system, and means to access said work table means and determine the workload status of each processing system in order to avoid deadlock situations.

The invention, however, stores old tasks that have not yet been executed in the local memories during the course of working on the problem. New tasks, created as a result of executing old or previous tasks, are initially stored in the associated local memories. One processor acts as an executive processor and stores in its local memory information about the workload of each processor. Tasks are transferred to idle or underloaded processors from overloaded processors to achieve a balanced workload within the system.

The method according to the invention is set out in claim 1.

The advantages of the invention are that distribution of the workload efficiently uses the system resources to rapidly execute a single job involving a multitude of tasks, and that decentralizing the tasks prevents any bottleneck from occurring which might otherwise occur if a single problem heap were used.

The invention will be apparent from the following description taken in connection with the accompanying drawings wherein:

Fig. 1 is a schematic block diagram of a data processing system embodying the invention;

Fig. 2 is a schematic block diagram of a cell shown in Fig. 1;

Fig. 3 is a schematic block diagram of the executive processing element;

Fig. 4 is a schematic block diagram of the logical structure of the system shown in Fig. 1;

Fig. 5 is a schematic block diagram of the hardware accelerator shown in Fig. 4;

Fig. 6 is a high level flow diagram of the operation of the system shown in Fig. 1;

Fig. 7 is a more detailed flow diagram of the executive processing loop shown in Fig. 6;

Fig. 8 is a more detailed flow diagram of a work processing loop shown in Fig. 6;

Fig. 9 is a more detailed schematic block diagram of a portion of the system shown in Fig. 4, useful in understanding certain aspects of the invention; and

Fig. 10 is a flow diagram of the workload balancing steps of the invention.

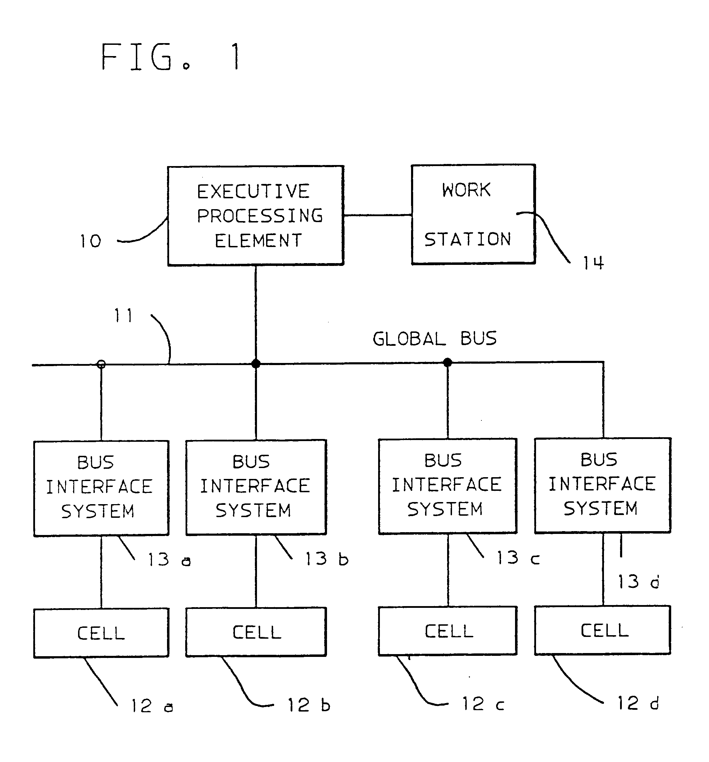

Referring now the drawings and first to Fig. 1, a multiprocessing system includes an executive processing element (EPE) 10 connected to a global bus 11. A plurality of cells 12a-12d each of which includes plural processors as more fully described below, are connected through a plurality of bus interface systems 13a-13d respectively to global bus 11. A work station 14, such as a personal computer, is connected to the executive processing element 10 and is operative amongst other things to input jobs into the multiprocessing system for execution and to provide output from the system.

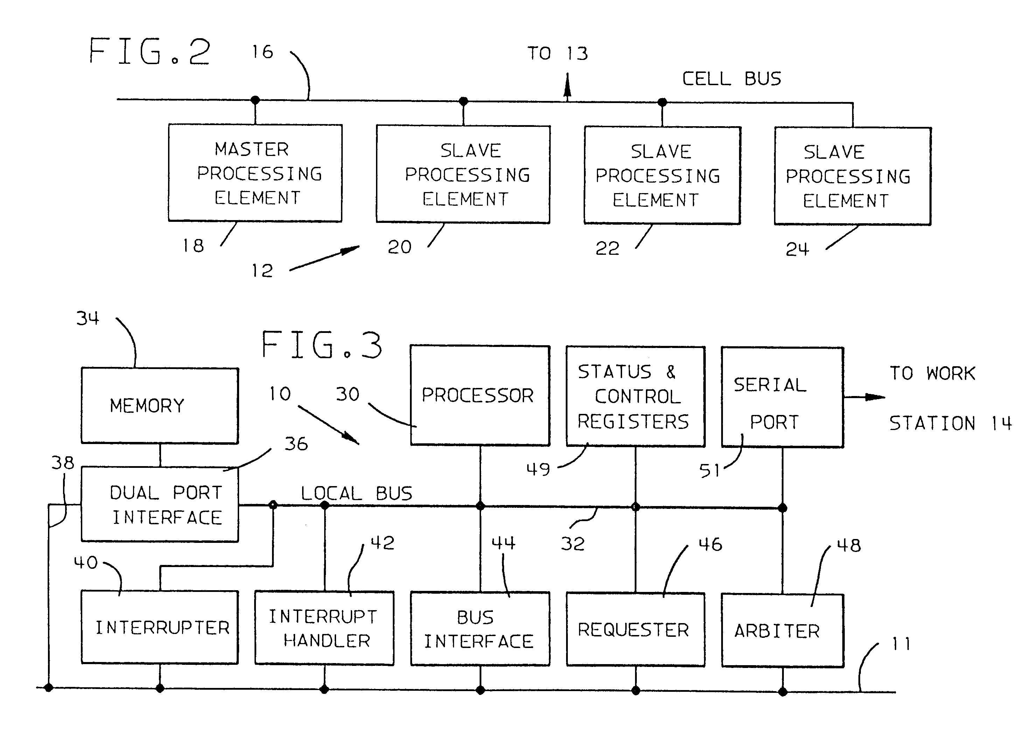

Referring to Fig. 2, each of cells 12 is identical so that only one need be described in detail. Each cell 12 comprises a cell bus 16 connected to the associated bus interface system (BIS) 13. Connected to bus 16 is a master processing element (MPE) 18 and three slave processing elements (SPE) 20, 22, and 24.

All of the processing elements 10, 18, 20, 22, and 24 are substantially identical so that only one need be described in detail. Each processing element is a commercially available micro-computer. With reference to Fig. 3, which shows executive processing element 10, each processing element includes a microprocessor or processor 30 connected to a local bus 32. Associated with processor 30 is a local memory 34 connected to a dual port interface 36. One port of interface 36 is connected to local bus 32 and provides the means whereby processor 30 accesses memory 34. The other port of interface 36 is connected by line 38 to bus 11 whereby other devices and processors external to processing element 10 can access local memory 34. Connected between busses 11 and 32 is an interrupter 40 the primary function of which is to interrupt other processors with an interrupt request initiated by processor 30. An interrupt handler 42 is also connected between the busses and its primary function is to receive interrupt requests from bus 11 for interruption of processor 30. A bus interface 44 is connected between busses 11 and 32 and provides the primary interconnection between the two busses for the transfer of addresses and data so that local bus 32 can be either connected to or disconnected from bus 11. When disconnected from bus 11, local bus 32 allows processor 30 to use local bus 32 independent of usage of bus 11. A requester 46 is connected between buses 32 and 11 and supplies signals over bus 11 to an arbiter 48 when processor 30 wants to be connected to or use bus 11. Arbiter 48 is connected to bus 11 and receives various requests for use of bus 11 and controls which request will be granted at any given time. Processing element 10 and each of the master processing elements 18 use an arbiter and act as a master for controlling use of the global bus or cell busses to which they are connected. The remaining processing elements which are slave processing elements have their respective arbiters 48 disabled. Status and control registers 49 are connected to bus 32 and provide information for use during the interrupt process. A serial port 51 connects processing element 10 to work station 14. However, the serial port is not used in the other processing elements of the system.

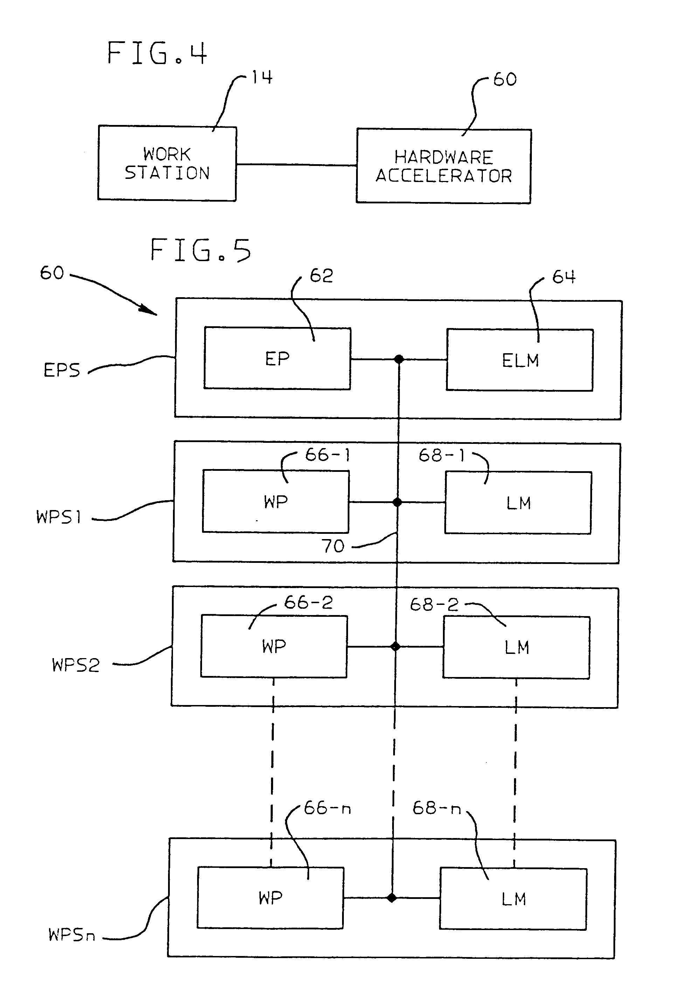

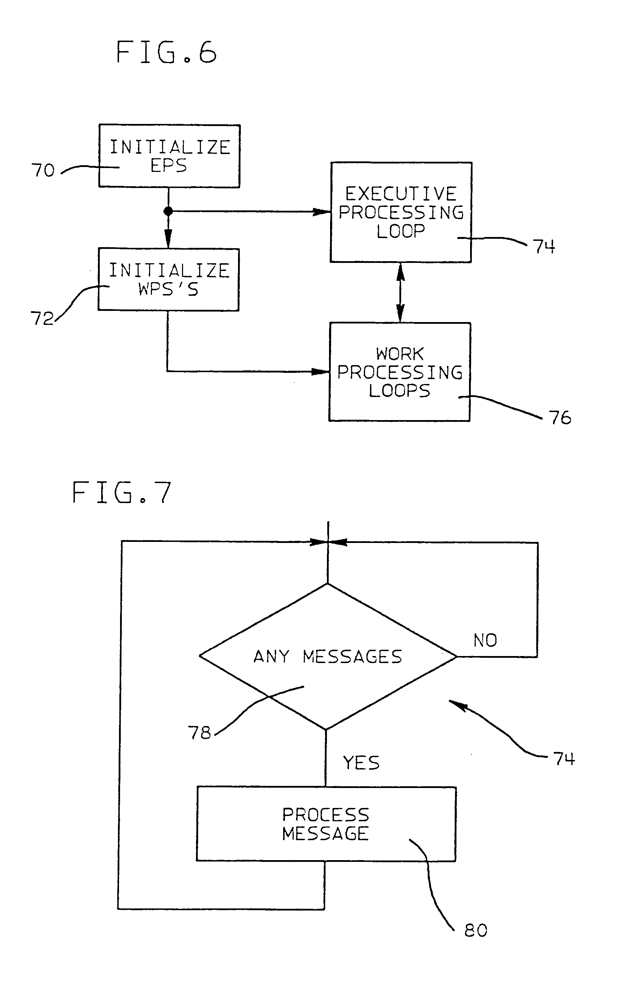

Logically, the above described system can be thought of, as shown in Fig. 4, as a work station 14 and a hardware accelerator 60. Referring to Fig. 5, hardware accelerator 60 comprises an executive processing system (EPS) 61 having an executive processor (EP) 62 and an executive local memory (ELM) 64. A plurality of work processing systems (WPS) 65-1 through 65-n respectively have a plurality of work processors (WP) 66-1 thru 66-n and a plurality of local memories (LM) 68-1 thru 68-n. All of processors 62 and 66 and memories 64 and 68 are connected together into a system by interconnect means 70 the details of which are described in our co-pending application serial number 734,304, filed May 15, l985, for "Interrupt Mechanism For Multiprocessing System Having Multiple Busses", and assigned to the assignee of this application. The number n of working processors is a function of the speed or performance of each individual processor and of the workload and a typical number would be sixteen for currently available, high performance microprocessors. More WPS's could be added as needed.

Each one of local memories 68 is loaded with the same set of programs so as to reduce the need for transmitting such programs in the system during the course of executing an application problem. Processors 66 intercommunicate primarily for the purposes of sending messages and transferring tasks, in a manner described in more detail below, to achieve a more balanced workload. EP 62 receives messages from and sends messages to WP 66 to monitor the workload and control distribution of tasks.

As indicated previously, the system of the invention is general purpose in nature, the system being designed to handle a variety of different problems related to the field of computer aided design. Each different problem would require its own application program. To facilitate further understanding of the invention, the operation of the system will be described by way of example using a string reduction problem. As is well known, the process of string reduction involves first representing a Boolean function by means of strings of bits. The reduction process accepts one string and produces one or two new strings which are then reduced, or it produces no string. The result of the entire process is to determine the values of the arguments for which the function is true. In a newly designed computer using VLSI technology, there might be thousands of strings each one of which might have thousands of arguments and operators. Each string is inputted into the hardware accelerator 60 for analysis by string reduction programs. Each string represents one problem and the entire multiprocessing system of hardware accelerator 60 is devoted to solving each problem before another problem or job is begun. String reduction programs are known.

Operation

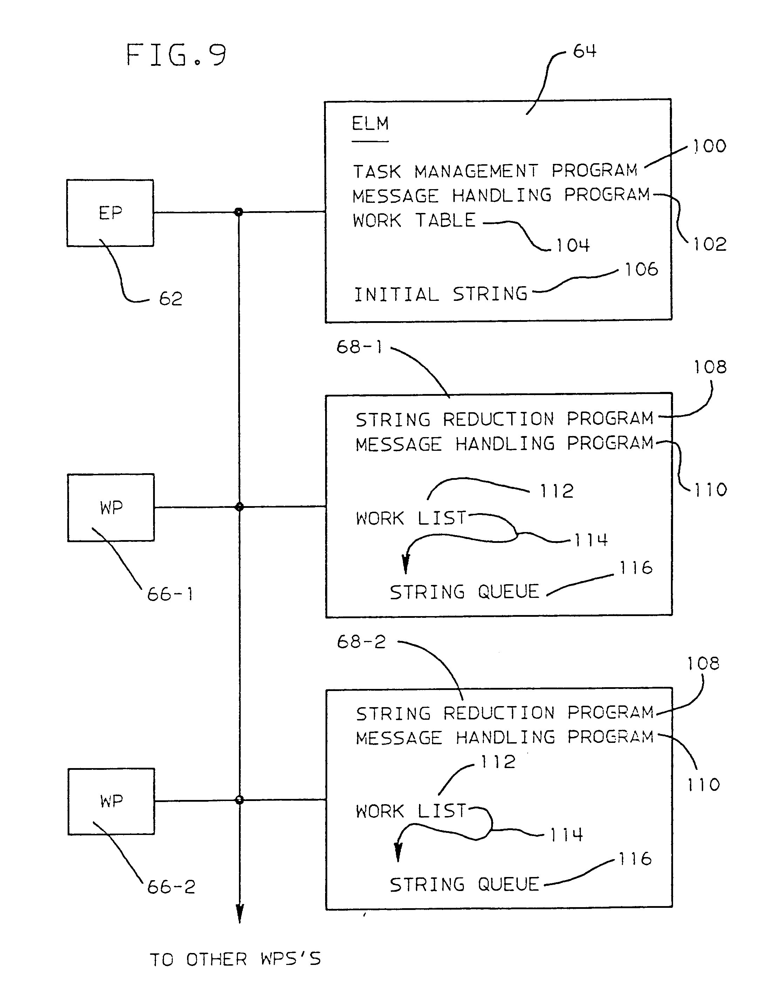

The operation of the invention will now be described. It is assumed at the start that each of the various processing systems is in an operating state ready to load and start any application programs. Thus, in such state, any necessary interpreters, run-time modules, operating systems, etc. are loaded in the memories of the processing systems. Further, it is assumed that the various application programs are stored in the work station along with all of the strings that are to be reduced. Thus, at the start of the operation of the invention, step 70 (Fig. 6) initializes the EPS. This initialization is done by storing in ELM64 (Fig. 9) a task management program 100 and a message handling program 102. A work table 104 is initialized and the initial string 106 to be reduced is stored. This initial string represents the problem or job that the hardware accelerator will execute in the manner described hereinafter. At the end of completion of step 70, task management program 100 then initiates step 72 (Fig. 6) to initialize all of the WPS's. Concurrently with initialization of the WPS's, EPS goes into an executive processing loop 74. During step 72, each LM68 (Fig. 9) is loaded with the same programs including a string reduction program 108 and a message handling program 110. A work list 112 is initialized and the work list contains a pointer 114 to a string area 116 that will contain the various tasks or strings to be reduced. Once the WPS's are initialized, then the various WPS's each go into a work processing loop 76 (Fig. 6) during the course of which the initial string is brought into one of the WPS's and the various newly spawned strings or tasks are distributed throughout the accelerator and executed until the problem is completed.

Referring to Fig. 7, executive processing loop 74 is simply an operation where the EPS processes the various messages as they are received and generates new messages. Step 78 determines whether there are any messages. If not, the operation will loop on itself until a message is detected at which time step 80 processes the message.

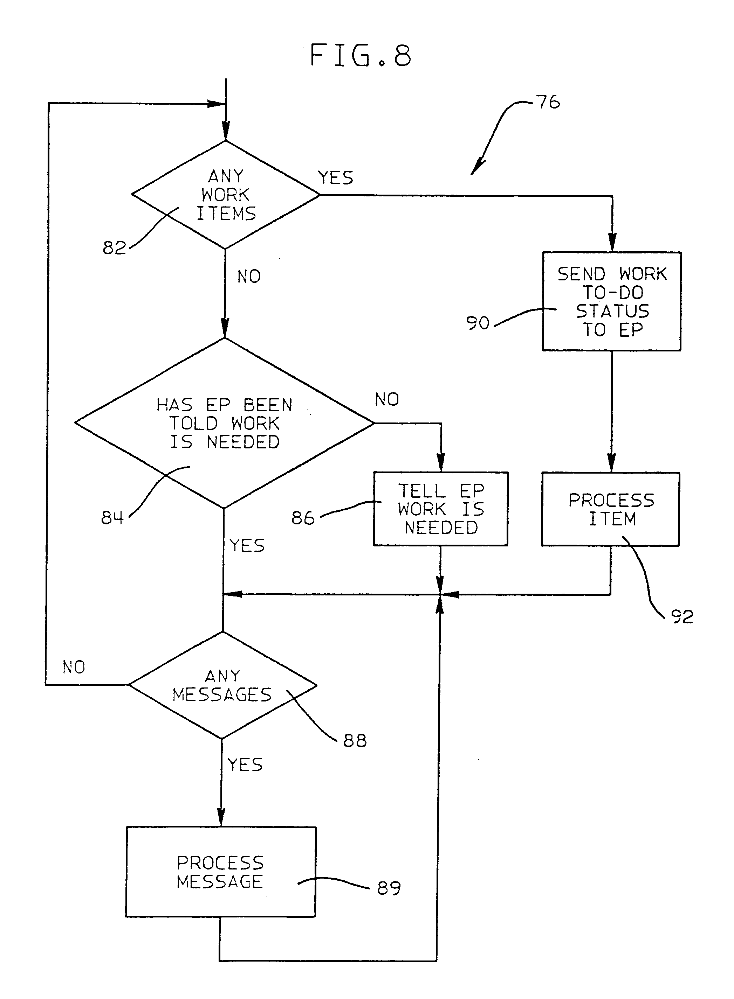

Referring to Fig. 8, each work processing loop 76 generally processes one work item or string reduction at a time and handles any messages that are received during the course of such processing. At the start, step 82 determines whether there are any work items to be processed. That is, is there a string stored in the associated local memory which needs to be reduced? If not, step 84 determines whether the executive processor has been told that work is needed by the processor in which the loop is being performed. After the initialization of each WPS has been performed, each work processor is empty and in need of work. Initially, step 84 determines that the processor has no work and therefore a message 86 is sent telling the executive processor that work is needed. Thereafter, on subsequent passes through the work processor, step 84 determines that the executive processor has been informed work is needed and then proceeds to step 88 for processing messages. Step 88 determines whether there are any messages to be processed. If not, the loop goes back to step 82. This loop would keep repeating itself until a work item has been received or a message has been received. If a message has been received, step 89 processes the message and upon completion branches back to step 88 to determine if any additional messages have been received. Thus, the loop formed by steps 88 and 89 completely processes all messages before a branch is made to step 82.

Once a work item is in the local memory, and step 82 determines that it is there, a branch is made to step 90 which sends a processor status message to the executive processor. Next, step 92 processes the work item, i.e., reduces a string. Afterwords, a branch is made to step 88 to process any further messages as appropriate before the next work item is processed.

Before proceeding with further description of the operation, details of work table 104, work list 112 and the various messages will be explained. Work table 104 is created in ELM 64 and has a plurality of groups of entries, there being one different group for each of WP 66-1 thru 66-n. Each group has the following fields or entries:

Field 1    processor ID
Field 2    number of strings to-do
Field 3    length of maximum size string to-do
Field 4    need work indicator

Quite obviously, work table 104 can be an array where the position in the array is indicative of the associated processor. Field 1 identifies the specific work processor to which the other fields of information are pertinent. Field 2 specifies the number of strings which are stored in the local memory of the associated processor which string are work items awaiting string reduction. Such number corresponds to the number of strings in the associated queue 116. Field 3 sets forth the length of the longest string in such queue. Fields 2 and 3 are set with information in a "processor workload" message described below. Field 4 may be simply a single bit representing whether or not the processor needs work.

Each work list 112 has the following fields:

4

Field 1    pointer 114 to first string on queue
Field 2    number of strings on queue
Field 1 either has a nul entry, indicating the queue is empty, or contains a pointer or address to the first item on the string queue. Field 2 is obvious.

Each item on each string queue 116 has the following fields:
Field 1    pointer to next item on queue
Field 2    length of string
Field 3    string to be reduced
There are four types of messages involved with workload balancing, the types being :

| type | function | parameters |
|---|---|---|
| 1 | need work | processor ID |
| 2 | share string | processor ID |
| 3 | get string | length of string, string |
| 4 | processor workload | number of strings, length of longest string to-do |

The "need work" message is sent to EP 62 in step 86 by a processor, which is idle or needs work, and identifies such processor needing work. The "share string" message is sent from the EPS to a selected work processor directing such processor to send a string to the processor identified in the message. The "get string" message is sent from the selected work processor to the work processor needing work and includes the string itself which is being transferred to the idle processor for processing. The "processor workload" message is sent from a work processor to EP 62 in step 90.

As the various work processors go through work processing loop 76 for the first time, each one sends a "need work" message to EP62. When the first such message is received by EP62, it then sends initial string 106, by means of a "Get String" message, to such processor. For the purpose of more precisely explaining the operation of the invention, let us assume that WP66-1 is sent the first "Need Work" message and that it in turn was sent the initial string by the "Get String" message. The initial string is then reduced by program 108 in WPS1 to form two strings which are then added to string queue 116, and information relative to them is added to work list 112. On the next pass through loop 76, the workload status is sent by step 90 to EP62 via workload status message, and then WPS1 proceeds to process the one of the strings on the list having the longest length. Since there is another string on the list that is yet to-do, i.e., to be reduced, WPS1 is now considered overloaded.

This additional string will then be sent to one of the other processors for reduction and the original two strings will then be broken up into four and the process will be repeated until all of the WPS's are involved with processing strings.

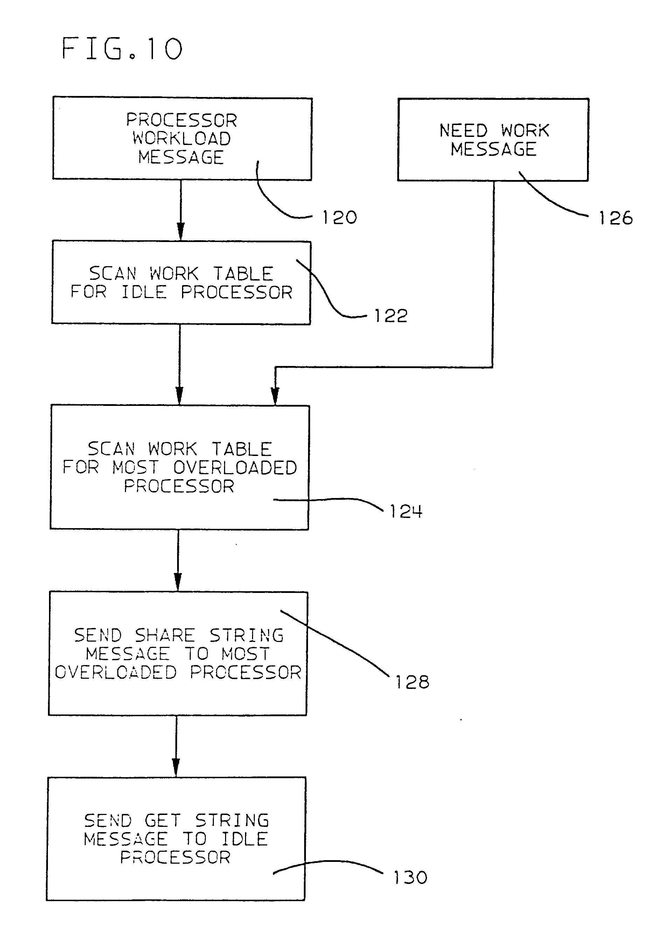

The workload distribution or balancing operation is best understood with reference to Fig. 10. When a processor workload message is sent by step 120 to EP62, program 100 then scans work table 104 to see if there is an idle processor. If there is no idle processor, then EP62 continues in processing loop 74. If there is an idle processor, then, in step 124, EP62 scans the work table to locate the processor that has the longest string yet to be reduced. Such processor is considered to be the most overloaded one in the system. Thereupon, in step 128, EP62 sends a "Share String" message to the most overloaded processor causing it in step 130 to send its longest string, by a "Get String" message, to the idle processor identified in step 122. Some of these steps are also used in the event that a "Need Work Message" is received, in steps 1 and 26 by EP62. In such case, steps 124, 128 and 130 are performed to send a string to the processor from which the "Need Work" message is received.

Assuming that the initial string 106 is typical of those that might be encountered in connection with VLSI design, and it contains thousands of arguments and operators, the early passes at reducing the strings merely spawn new strings that will need to be reduced. As the reduction program proceeds, some of the resultant reduced strings will be completed and they will then be added to a completed string list while those that are not completed undergo further string reduction. As the initially newly reduced strings are distributed throughout the system until all of the processors are busy, it is likely that some processors will be involved with long strings and some with short strings. That is, the reduction procedure produces strings whose lengths are quite imbalanced so that some processors will complete their work quickly and go back for more work while other processors will continue to process the strings each one generates without having to get any additional new work. Eventually, when all of the strings have been reduced to completion, the various processors will all become idle at which time another initial string 106 can be introduced from the work station to repeat the process.

## EP 0 232 509 B1

### Claims

**1.** The method of operating a multiprocessing system having a plurality of interconnected processing systems (WPSi) which method involves concurrently executing a plurality of old tasks in said processing systems to dynamically create a plurality of new tasks, characterized by the steps comprising:

storing each new task immediately after it is created in the same one of said data processing systems which created such new task to thereby form an old task,

arranging a plurality of old tasks in each processing system to create a backlog,

monitoring said processing systems to determine which ones have backlogs and which ones are without backlogs,

and transferring old tasks from processing systems having backlogs to processing systems without backlogs for execution thereby, so as to concurrently execute a maximum number of tasks within said multiprocessing system.

**2.** The method in accordance with Claim 1 comprising:

operating one of said processing system as an executive processing system (EPS) and operating other processing systems as working processing systems (WPSi) for executing said old tasks;

said monitoring step comprises generating information about the backlogs of said working processing systems and storing such information in said executive processing system; and

operating said executive processing system to initiate said step of transferring old tasks.

**3.** The method in accordance with Claim 2, comprising:

storing in said executive processing system a work list containing said information about said backlogs, said information including for each processor an indication of whether or not such processor needs work.

**4.** The method in accordance with Claim 1 wherein said transferring step comprises sending a first message to a first processing system having a backlog which message directs the transferrence of a task, and sending a second message from said first processing system receiving said first message to a second processing system to which such task is to be transferred, said second message indicating to said second processing system the location of said task to be transferred.

### Revendications

**1.** Procédé de fonctionnement d'un système multiprocesseur ayant une pluralité de systèmes de traitement interconnectés (WPSi) lequel procédé implique l'exécution simultanée d'une pluralité de tâches anciennes dans lesdits systèmes de traitement pour créer de façon dynamique une pluralité de nouvelles tâches, caractérisé par les étapes de:
emmagasinage de chaque nouvelle tâche immédiatement après qu'elle a été créée dans le même système parmi lesdits systèmes de traitement de données qui a créé cette nouvelle tâche pour former de ce fait une tâche ancienne,
arrangement d'une pluralité de tâches anciennes dans chaque système de traitement pour créer un arriéré,
supervision desdits systèmes de traitement pour déterminer lesquels ont des arriérés et lesquels sont dépourvus d'arriérés, et
transfert des tâches anciennes depuis les systèmes de traitement ayant des arriérés sur des systèmes de traitement sans arriérés pour leur exécution de manière à exécuter simultanément un nombre minimal de tâches dans ledit système multiprocesseur.

6

**2.** Procédé selon la revendication 1, comprenant:

l'actionnement dudit système de traitement en tant que système de traitement directeur (EPS) et actionnement d'autres systèmes de traitement de travail (WPSi) pour l'exécution desdites tâches anciennes;

ladite étape de supervision comprenant la génération d'informations relatives aux arriérés desdits systèmes de traitement de travail et l'emmagasinage de ces informations dans ledit système de traitement directeur, et

l'actionnement dudit système de traitement pour amorcer ladite étape de transfert de tâches anciennes.

**3.** Procédé selon la revendication 2, comprenant:

l'emmagasinage dans ledit système de traitement directeur un liste de travaux contenant lesdites informations relatives auxdits arriérés, lesdites informations comportant pour chaque processeur une indication portant sur le besoin de travail ou non de ce processeur.

**4.** Procédé selon la revendication 1, dans lequel ladite étape de transfert comprend l'envoi d'un premier message sur un premier système de traitement ayant un arriéré lequel message dirige le transfert d'une tâche, et l'envoi d'un deuxième message depuis ledit premier système de traitement recevant ledit premier message sur un deuxième système de traitement sur lequel doit être transférée cette tâche, ledit deuxième message indiquant audit deuxième système de traitement l'emplacement de ladite tâche à transférer.

**Patentansprüche**

**1.** Verfahren zum Betreiben eines Mehrprozessorsystems mit einer Vielzahl von untereinander verbundenen Prozessorsystemen (WPSi), welches Verfahren die gleichzeitige Ausführung einer Vielzahl von alten Aufgaben in den genannten Prozessorsystemen zur dynamischen Erzeugung einer Vielzahl von neuen Aufgaben beinhaltet,
gekennzeichnet durch Schritte, die folgendes aufweisen:

Speichern einer jeden neuen Aufgabe unmittelbar nach ihrer Entstehung in demselben der genannten Datenverarbeitungssysteme, welches solche neuen Aufgaben erzeugt, wodurch eine alte Aufgabe gebildet wird,

Ordnen einer Vielzahl von alten Aufgaben in jedem Prozessorsystem zur Erzeugung eines Auftragsrückstandes,

Überwachung der genannten Prozessorsysteme zur Bestimmung, welche Systeme Auftragsrückstände haben und welche Systeme ohne Auftragsrückstände sind,

und Übertragung von alten Aufgaben von Prozessorsystemen, die Auftragsrückstände haben, zu Prozessorsystemen ohne Auftragsrückstände und zur Ausführung durch diese Systeme, wodurch gleichzeitig eine maximale Anzahl von Aufgaben innerhalb des genannten Mehrprozessorsystems ausgeführt wird.

**2.** Verfahren nach Anspruch 1, folgendes aufweisend:

Betreiben von einem der genannten Prozessorsysteme als Durchführungs-Prozessorsystem (EPS) und Betreiben von anderen Prozessorsystemen als Arbeits-Prozessorsysteme (WPSi) zur Ausführung der genannten alten Aufgaben;

der genannte Überwachungsschritt weist die Erzeugung von Informationen auf über die Auftragsrückstände der genannten Arbeits-Prozessorsysteme, und Speicherung einer solchen Information im genannten Durchführungs-Prozessorsystem; und

Betreiben des genannten Durchführungs-Prozessorsystems zur Einleitung des genannten Schrittes zur Übertragung von alten Aufgaben.

**3.** Verfahren nach Anspruch 2, folgendes aufweisend:

Speicherung einer Arbeitsliste, die die genannte Information über die genannten Auftragsrückstände enthält, im genannten Druchführungs-Prozessorsystem, wobei die genannte Information für jeden Prozessor eine Anzeige darüber enthält, ob ein solcher Prozessor Arbeit benötigt, oder nicht.

**4.** Verfahren nach Anspruch 1, worin der genannte Übertragungsschritt das Aussenden einer ersten Nachricht zu einem ersten Prozessorsystem, das einen Auftragsrückstand hat, aufweist, wobei diese Nachricht die Übertraung einer Aufgabe steuert,

und worin der genannte Übertragungsschritt das Aussenden einer zweiten Nachricht vom genannten ersten Prozessorsystem, das die erste Nachricht empfängt, zu einem zweiten Prozessorsystem zu dem eine solche Aufgabe übertragen werden soll, aufweist, wobei die zweite Nachricht dem genannten zweiten Prozessorsystem den Ort der zu übertragenden Aufgabe anzeigt.

FIG. 1

FIG.2

FIG.3

FIG.4

WORK STATION ~14

HARDWARE ACCELERATOR ~60

FIG.5

# FIG.6

```
          ┌─────────────┐
   70 ─────│ INITIALIZE  │
          │    EPS      │
          └─────────────┘
                 │
                 ●──────────────────────┐
                 │                       ▼
                 ▼                ┌─────────────┐
          ┌─────────────┐        │ EXECUTIVE   │
          │ INITIALIZE  │        │ PROCESSING  │
          │   WPS'S     │        │    LOOP     │── 74
          └─────────────┘        └─────────────┘
    72                                  │
          │                             ▲
          │                             ▼
          │                     ┌─────────────┐
          └────────────────────▶│   WORK      │
                                │ PROCESSING  │
                                │   LOOPS     │── 76
                                └─────────────┘
```

# FIG.7

```
        ┌──────────────────────────────────────┐
        │                ×◄──┐                  │
        │               ╱ ╲                     │
        │             ╱     ╲        NO          │
        │           ╱  ANY    ╲──────────────────┘
        │           ╲ MESSAGES ╱
        │      78 ────╲        ╱ ── 74
        │              ╲      ╱
        │                ╲  ╱
        │                 × 
        │               YES
        │          ┌─────────────┐
        └──────────│  PROCESS    │
                   │  MESSAGE    │── 80
                   └─────────────┘
```

12

# FIG.8

```
                    76
        ANY
        WORK        YES
        ITEMS ──────────────────────────┐
   82                                    │
        NO                          SEND WORK
        │                            TO-DO
        │                     90    STATUS
        │                            TO EP
        │                               │
    HAS EP BEEN      NO                  │
    TOLD WORK ──────────────┐           │
    IS NEEDED               │           │
  84              │         │           │
        YES       86   TELL EP     PROCESS
        │              WORK IS      ITEM
        │              NEEDED        │
        │                │           │   92
        │◄───────────────┴───────────┘
        │
 NO     ANY
 ◄───── MESSAGES
        │        88
        YES
        │
    PROCESS
    MESSAGE          89
        │
        └────────────────
```

FIG.9

64

ELM

TASK MANAGEMENT PROGRAM — 100
MESSAGE HANDLING PROGRAM — 102
WORK TABLE — 104

INITIAL STRING — 106

EP — 62

68-1

108

STRING REDUCTION PROGRAM — 108
MESSAGE HANDLING PROGRAM — 110

112

WORK LIST —
114

STRING QUEUE — 116

WP — 66-1

68-2

108

STRING REDUCTION PROGRAM — 108
MESSAGE HANDLING PROGRAM — 110

112

WORK LIST —
114

STRING QUEUE — 116

WP — 66-2

TO OTHER WPS'S

# FIG.10

```
┌─────────────────┐                    ┌─────────────────┐
│   PROCESSOR     │                    │   NEED WORK     │
│   WORKLOAD      │                    │    MESSAGE      │
│   MESSAGE       │                    │                 │
└─────────────────┘                    └─────────────────┘
         │              ～120                    │         ～126
         ▼
┌─────────────────┐
│ SCAN WORK TABLE │
│ FOR IDLE PROCESSOR│
└─────────────────┘  ～122
         │                                       │
         │                                       │
         ▼              ▼
┌─────────────────┐
│  SCAN WORK TABLE│
│ FOR MOST OVERLOADED│
│    PROCESSOR    │
└─────────────────┘  ～124
         │
         ▼
┌─────────────────┐
│ SEND SHARE STRING│
│  MESSAGE TO MOST│
│OVERLOADED PROCESSOR│
└─────────────────┘  ～128
         │
         ▼
┌─────────────────┐
│ SEND GET STRING │
│ MESSAGE TO IDLE │
│    PROCESSOR    │
└─────────────────┘  ～130
```